# EUROPEAN PATENT SPECIFICATION

(11) **EP 4 416 221 B1**
(45) Date of publication and mention of the grant of the patent: **07.10.2026**
(21) Application number: 22801658.0
(22) Date of filing: 11.10.2022
(51) Int. Cl.: C08L 23/08, C08F 210/16

(54) **POLYMER BLENDS COMPRISING POST-CONSUMER RECYCLED RESIN**
POLYMERMISCHUNGEN, DIE RECYCELTES HARZ AUS DEM ABFALL ENTHALTEN
MÉLANGES DE POLYMÈRES COMPRENANT UNE RÉSINE RECYCLÉE POST-CONSOMMATION

(30) Priority: 15.10.2021 US 202163256259 P
(43) Date of publication of application: 21.08.2024
(73) Proprietor: Dow Global Technologies LLC, Midland, MI 48674 (US)
(72) Inventor: ZENG, Yongchao, Lake Jackson, Texas 77566 (US); HEITSCH, Andrew T., Lake Jackson, Texas 77566 (US); LIU, Bo, Lake Jackson, Texas 77566 (US); KAPUR, Mridula, Lake Jackson, Texas 77566 (US)
(74) Representative: Boult Wade Tennant LLP
(86) International application number: PCT/US2022/077894
(87) International publication number: WO 2023/064760

(56) References cited:
- WO-A1-2005/041214
- WO-A1-2016/005265
- WO-A1-2021/233820
- WO-A1-2022/031398

## Description

### TECHNICAL FIELD

Embodiments of the present disclosure generally relate to polymer blends comprising a post-consumer resin (PCR), and products produced therefrom.

### INTRODUCTION

Post-consumer resin (PCR) plays an increasingly larger role in environmental sustainability initiatives and efforts in today's world. PCR provides a way for industries to re-process and re-incorporate materials into consumer articles, which limits the consumption of new resources, permits the re-use of old materials, and sustainably creates the production of new articles. The novelty and inherent variability of PCR presents challenges to industries striving to use PCR in effective ways. PCR typically consists of a mélange of materials (e.g., polymer blends, organic, or inorganic material). As a result, PCR and its properties can have a high degree of variability in each lot, batch, or individual resin, and its precise constituents, composition, and corresponding characteristics and properties often fluctuate. It can therefore be difficult to diagnose or predict how polymer blends incorporating PCR will perform or react, and so it can be challenging to effectively incorporate PCR to produce consumer articles with uniform, validated, or desirable characteristics. For example, PCR rich in polymeric material is a prime candidate for film or sheet applications, but such films or sheets, when formed from a polymer blend including PCR, can be compromised on mechanical properties, such as toughness and stiffness.

Accordingly, there remains a need for sustainable and efficiently produced films that include PCR while maintaining or minimizing the reduction of other desirable mechanical properties, such as toughness and stiffness.

WO 2005/041214 A1 refers to a cable with a coating layer made from a waste material. WO 2016/005265 A1 refers to a process for producing high density polyethylene composition having high environmental stress crack resistance from post consumer plastic and articles made of said composition.

### SUMMARY

Embodiments of the present disclosure address this desire for sustainability while maintaining the desired mechanical properties, and in some instances, allowing for downgauging the film thickness of PCR-incorporated films.

In one embodiment, a thermoplastic composition comprising: from 0.5 wt% to 75.0 wt.% of a PCR comprising a blend of polyethylene recovered from post-consumer material, pre-consumer material, or combinations thereof; and from 25.0 wt.% to 99.5 wt% of virgin bimodal polyethylene is provided. The PCR has a density of from 0.900 g/cm³ to 0.975 g/cm³ when measured according to ASTM D792-08, Method B; a melt index (I₂) of from 0.1 dg/min to 3.0 dg/min when measured according to ASTM D1238-10, Method B, at 190 °C and a 2.16 kg load. The virgin bimodal polyethylene has: a density of from 0.905 g/cm³ to 0.935 g/cm³ when measured according to ASTM D792-08, Method B; and a melt index (I₂) of from 0.1 dg/min to 1.0 dg/min when measured according to ASTM D1238-10, Method B, at 190 °C and a 2.16 kg load; a melt flow ratio (MFR₂₁) greater than or equal to 30 but less than 70, wherein the melt flow ratio (MFR₂₁) is a ratio of a high load melt index (I₂₁) of the virgin bimodal polyethylene to the melt index (I₂) of the virgin bimodal polyethylene, and the high load melt index (I₂₁) is measured according to ASTM D1238-10, Method B, at 190 °C and a 21.6 kg load; a molecular weight distribution (M_{w(Abs)}/M_{n(Abs)}) from 7 to 15, wherein the molecular weight distribution (M_{w(Abs)}/M_{n(Abs)}) is a ratio of a weight average molecular weight (Mw(Abs)) of the virgin bimodal polyethylene to a number average molecular weight (M_{n(Abs)}) of the virgin bimodal polyethylene as measured using gel permeation chromatography (GPC); and an improved comonomer content distribution (iCCD) wt. fraction greater than 30 wt.% at a temperature range of 35 to 90 °C, the iCCD wt. fraction being defined as a ratio of the mass eluted at temperatures from 35 °C to 90 °C for the virgin bimodal polyethylene resin to the total mass eluted for the virgin bimodal polyethylene resin when measured using an iCCD curve of mass eluted versus temperature, and an iCCD wt. fraction greater than 8 wt.% at a temperature range of 95 to 115 °C. At least 90.0 wt.% of the thermoplastic composition is comprised of the PCR and the virgin bimodal polyethylene.

Additional features and advantages of the embodiments will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing and the following description describes various embodiments and are intended to provide an overview or framework for understanding the nature and character of the claimed subject matter. The accompanying figures are included to provide a further understanding of the various embodiments, and are incorporated into and constitute a part of this specification.

### DETAILED DESCRIPTION

### Definitions

As used herein, the terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

As used herein, the term "polymer" refers to a polymeric compound prepared by polymerizing monomers, whether of the same or a different type. The term polymer thus embraces the term homopolymer (employed to refer to polymers prepared from only one type of monomer, with the understanding that trace amounts of impurities can be incorporated into the polymer structure), and the term copolymer or interpolymer. Trace amounts of impurities (for example, catalyst residues) may be incorporated into and/or within the polymer. A polymer may be a single polymer or a polymer blend.

"Polyethylene" or "ethylene-based polymer" means polymers comprising greater than 50% by mole of units derived from ethylene monomer. This includes ethylene-based homopolymers or copolymers (meaning units derived from two or more comonomers). Common forms of ethylene-based polymers known in the art include, but are not limited to, Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m- LLDPE); Medium Density Polyethylene (MDPE); and High Density Polyethylene (HDPE).

As used herein, the term "LDPE" or "low density polyethylene" refers to an ethylene homopolymer prepared using a free radical, high-pressure (≥ 100 MPa (for example, 100-400 MPa)) polymerization. LDPE resins typically have a density in the range of 0.916 to 0.935 g/cm³.

The term "LLDPE" or "linear low density polyethylene includes resin made using Ziegler-Natta catalyst systems as well as resin made using single-site catalysts, including, but not limited to, bis-metallocene catalysts (sometimes referred to as "m-LLDPE"), phosphinimine, and constrained geometry catalysts, and resins made using post-metallocene, molecular catalysts, including, but not limited to, bis(biphenylphenoxy) catalysts (also referred to as polyvalent aryloxyether catalysts). LLDPE includes linear, substantially linear, or heterogeneous ethylene-based copolymers or homopolymers. LLDPEs contain less long chain branching than LDPEs and include the substantially linear ethylene polymers, which are further defined in U.S. Patent No. 5,272,236, U.S. Patent No. 5,278,272, U.S. Patent No. 5,582,923 and U.S. Patent No. 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and blends thereof (such as those disclosed in U.S. Patent No. 3,914,342 and U.S. Patent No. 5,854,045). The LLDPE resins can be made via gas-phase, solution-phase, or slurry polymerization or any combination thereof, using any type of reactor or reactor configuration known in the art.

The terms "pre-consumer recycled polymer" and "post-industrial recycled polymer" refer to polymers, including blends of polymers, recovered from pre-consumer material, as defined by ISO-14021. The generic term pre-consumer recycled polymer thus includes blends of polymers recovered from materials diverted from the waste stream during a manufacturing process. The generic term pre-consumer recycled polymer excludes the reutilization of materials, such as rework, regrind, or scrap, generated in a process and capable of being reclaimed within the same process that generated it.

The term "post consumer resin" (or "PCR"), as used herein, refers to a polymeric material that includes materials previously used in a consumer or industry application i.e., pre-consumer recycled polymer and post-industrial recycled polymer. PCR is typically collected from recycling programs and recycling plants. The PCR may include one or more of a polyethylene, a polypropylene, a polyester, a poly(vinyl chloride), a polystyrene, an acrylonitrile butadiene styrene, a polyamide, an ethylene vinyl alcohol, an ethylene vinyl acetate, or a poly-vinyl chloride. The PCR may include one or more contaminants. The contaminants may be the result of the polymeric material's use prior to being repurposed for reuse. For example, contaminants may include paper, ink, food residue, or other recycled materials in addition to the polymer, which may result from the recycling process. PCR is distinct from virgin polymeric material. A virgin polymeric material (such as a virgin bimodal polyethylene resin) does not include materials previously used in a consumer or industry application. Virgin polymeric material has not undergone, or otherwise has not been subject to, a heat process or a molding process, after the initial polymer manufacturing process. The physical, chemical, and flow properties of PCR resins differ when compared to virgin polymeric resin, which in turn can present challenges to incorporating PCR into formulations for commercial use.

The term "HDPE" or "high density polyethylene" refers to ethylene-based polymers having densities greater than 0.940 g/cc, which are generally prepared with Ziegler-Natta catalysts, chrome catalysts or even metallocene catalysts. For additional clarity, while the HDPE is an ethylene/alpha-olefin copolymer, it is not a lower density ethylene/alpha-olefin copolymer having a density of 0.850 g/cc to 0.910 g/cc as described herein.

As used herein, "bimodal" means compositions that can be characterized by having at least two (2) polymer subcomponents with varying densities and weight averaged molecular weights, and optionally, may also have different melt index values. In one embodiment, bimodal may be defined by having two distinct peaks in a Gel Permeation Chromatography (GPC) chromatogram showing the molecular weight distribution.

### Thermoplastic Composition

Embodiments of the present disclosure are directed to a thermoplastic composition comprising: from 0.5 wt% to 75.0 wt.% of PCR comprising a blend of polyethylene recovered from post-consumer material, pre-consumer material, or combinations thereof; and from 25.0 wt.% to 99.5 wt% of virgin bimodal polyethylene is provided. The PCR has a density of from 0.900 g/cm³ to 0.975 g/cm³ when measured according to ASTM D792-08, Method B; and a melt index (I₂) of from 0.1 dg/min to 3.0 dg/min when measured according to ASTM D1238-10, Method B, at 190 °C and a 2.16 kg load. The virgin bimodal polyethylene has: a density of from 0.905 g/cm³ to 0.935 g/cm³ when measured according to ASTM D792-08, Method B; a melt index (I₂) of from 0.1dg/min to 1.0 dg/min when measured according to ASTM D1238-10, Method B, at 190 °C and a 2.16 kg load; a melt flow ratio (MFR₂₁) greater than or equal to 30 but less than 70, wherein the melt flow ratio (MFR₂₁) is a ratio of a high load melt index (I₂₁) of the virgin bimodal polyethylene to the melt index (I₂) of the virgin bimodal polyethylene, and the high load melt index (I₂₁) is measured according to ASTM D1238-10, Method B, at 190 °C and a 21.6 kg load; a molecular weight distribution (M_{w(Abs)}/M_{n(Abs)}) from 7 to 15, wherein the molecular weight distribution (M_{w(Abs)}/M_{n(Abs)}) is a ratio of a weight average molecular weight (M_{w(Abs)}) of the virgin bimodal polyethylene to a number average molecular weight (M_{n(Abs)}) of the virgin bimodal polyethylene as measured using gel permeation chromatography (GPC); and an improved comonomer content distribution (iCCD) wt. fraction greater than 30 wt.% at a temperature range of 35 to 90 °C, the iCCD wt. fraction being defined as a ratio of the mass eluted at temperatures from 35 °C to 90 °C for the virgin bimodal polyethylene resin to the total mass eluted for the virgin bimodal polyethylene resin when measured using an iCCD curve of mass eluted versus temperature, and an iCCD wt. fraction greater than 8 wt.% at a temperature range of 95 to 115 °C. At least 90.0 wt.% of the thermoplastic composition is comprised of the PCR and the virgin bimodal polyethylene.

The thermoplastic composition comprises from 0.5 to 75 weight percent (wt.%) of PCR. All individual values and subranges of from 10 to 75 wt.% are disclosed and included herein; for example, the polymer blend may comprise from 10 to 70 wt.%, from 10 to 75 wt.%, from 15 to 75 wt.%, from 20 to 75 wt.%, from 45 to 75 wt.%, from 50 to 75 wt.%, from 55 to 75 wt.%, from 60 to 75 wt.%, from 65 to 75 wt.%, 10 to wt.%, from 35 to 75 wt.%, from 10 to 60 wt.%, from 20 to 60 wt.%, from 30 to 60 wt.%, from 35 to 60 wt.%, from 40 to 60 wt.%, from 45 to 60 wt.%, from 50 to 60 wt.%, from 55 to 60 wt.%, from 10 to 50 wt.%, from 20 to 50 wt.%, 30 to 50 wt.%, from 35 to 50 wt.%, from 40 to 50 wt.%, from 45 to 50 wt.%, 30 to 40 wt.%, or from 35 to 40 wt.% PCR resin, based on the total wt.% of the thermoplastic composition.

The thermoplastic composition comprises from 25 to 99.5 wt.% of the virgin bimodal polyethylene. For example, the thermoplastic composition may comprise from 25 to 85 wt.%, from 25 to 75 wt.%, from 25 to 60 wt.%, from 25 to 45 wt.%, from 25 to 30 wt.%, from 30 to 90 wt.%, from 40 to 90 wt.%, from 40 to 75 wt.%, from 40 to 60 wt.%, from 40 to 50 wt.%, from 55 to 90 wt.%, from 55 to 75 wt.%, from 70 to 90 wt.%, or any subset thereof, of the virgin bimodal polyethylene resin.

The thermoplastic composition may comprise an overall density of from an overall density of from 0.910 to 0.950 g/cc, based on the weight of the thermoplastic composition. For example, the PCR may comprise an overall density of from 0.910 to 0.940 g/cc, from 0.910 to 0.925 g/cc, from 0.910 to 0.920 g/cc, from 0.910 to 0.915 g/cc, from 0.915 to 0.930 g/cc, from 0.915 to 0.925 g/cc, from 0.915 to 0.920 g/cc, from 0.920 to 0.930, from 0.920 to 0.925 g/cc, from 0.915 to 0.925 g/cc, or any subset thereof.

### PCR

It is contemplated that the PCR includes various compositions. PCR may be sourced from HDPE packaging such as bottles (milk jugs, juice containers), LDPE/LLDPE packaging such as films. PCR also includes residue from its original use, residue such as paper, adhesive, ink, nylon, ethylene vinyl alcohol (EVOH), polyethylene terephthalate (PET), and other odor-causing agents. Sources of PCR can include, for example, bottle caps and closures, milk, water or orange juice containers, detergent bottles, office automation equipment (printers, computers, copiers, etc.), white goods (refrigerators, washing machines, etc.), consumer electronics (televisions, video cassette recorders, stereos, etc.), automotive shredder residue (the mixed materials remaining after most of the metals have been sorted from shredded automobiles and other metal-rich products "shredded" by metal recyclers), packaging waste, household waste, rotomolded parts (kayaks/coolers), building waste and industrial molding and extrusion scrap.

In embodiments, the PCR comprises polyethylene, such as low density polyethylene, linear low density polyethylene, or a combination thereof. In embodiments, the PCR further comprises residue from its original use, such as paper, adhesive, ink, nylon, ethylene vinyl alcohol (EVOH), polyamide (PA), polyethylene terephthalate (PET), and other organic or inorganic material. Examples of PCR include AVANGARD^{™} NATURA PCR-LDPCR-100 ("AVANGARD^{™} 100") and AVANGARD^{™} NATURA PCR-LDPCR-150 ("AVANGARD^{™} 150") (PCR commercially available from Avangard Innovative LP, Houston, Texas).

In embodiments, the PCR may have a density of 0.900 to 0.975 g/cc and a melt index I₂ from 0.5 to 3 g/10 min when measured at 190 °C and 2.16 kg. For example, the PCR may have a density of from 0.900 to 0.940 g/cc, from 0.900 to 0.930 g/cc, from 0.900 to 0.920 g/cc, from 0.900 to 0.910 g/cc, from 0.910 to 0.940 g/cc, from 0.920 to 0.940 g/cc, from 0.930 to 0.940 g/cc, from 0.910 to 0.930, from 0.920 to 0.930, or any subset thereof; and a melt index I₂ of from 0.5 to 3 g/10 min, from 0.5 to 2 g/10 min, from 0.5 to 1 g/10 min, from 1 to 5 g/10 min, from 2 to 4 g/10 min, or any subset thereof..

In embodiments, the PCR comprises LLDPE having a density from 0.910 g/cc to 0.925 g/cc and a melt index I₂ from 1.8 to 2.8 g/10 min when measured at 190 °C and 2.16 kg. In embodiments, the PCR comprises LLDPE having a density from 0.920 g/cc to 0.935 g/cc. The LDPE may have a melt index I₂ from 0.5 to 1 g/10 min when measured at 190 °C and 2.16 kg.

In embodiments, the PCR has a second heat of fusion in the range of from 120 to 230 Joule/gram (J/g), measured according to the DSC test method described below. All individual values and subranges of from 130 to 170 J/g are disclosed and incorporated herein; for example, the heat of fusion of the PCR can be from 130 to 170 J/g, from 130 to 160 J/g, from 130 to 150 J/g, from 130 to 140 J/g, from 140 to 170 J/g, from 140 to 160 J/g, from 140 to 150 J/g, from 150 to 170 J/g, or from 155 to 170 J/g, when measured according to the DSC test method described below.

The PCR may have a differential scanning calorimeter (DSC) second heat of fusion of 120 J/g to 230 J/g, when measured according to the DSC test method described below. For example, the PCR may have a DSC second heat of fusion of 120 J/g to 200 J/g, of 120 J/g to 180 J/g, 120 J/g to 160 J/g, 120 J/g to 140 J/g, 140 J/g to 230 J/g, 140 J/g to 200 J/g, 140 J/g to 180 J/g, 140 J/g to 160 J/g, 160 J/g to 230 J/g, 160 J/g to 200 J/g, 160 J/g to 180 J/g, 180 J/g to 230 J/g, 180 J/g to 200 J/g, 200 J/g to 230 J/g, or any subset thereof.

In embodiments, the PCR has a peak melting temperature (Tm) of from 105 °C to 127 °C, when measured according to the DSC test method describe below. All individual values and subranges of from 105 °C to 127 °C are disclosed and incorporated herein; for example, the peak melting temperature (Tm) of the PCR can be from 105 °C to 125 °C, 107 °C to 125 °C, 109 °C to 125 °C, 111°C to 125 °C, 113 °C to 125 °C, 115 °C to 125 °C, 117 °C to 125 °C, 105 °C to 123 °C, 107 °C to 123 °C, 109 °C to 123 °C, 111 °C to 123 °C, 113 °C to 123 °C, 115 °C to 123 °C, 117 °C to 123 °C, 119 °C to 123 °C, 121 °C to 123 °C, 119 °C to 127 °C, 119 °C to 125 °C, 119 °C to 123 °C, 119 °C to 121°C, 121 °C to 125 °C, 123 °C to 127 °C, 123 °C to 125 °C, or 125 °C to 127 °C, when measured according to the DSC test method described below.

The PCR may have a count of defect with an equivalent circular diameter in the range of 200-400 µm (per 24.6 cm³ of film) greater than 500, or greater than 800, or greater than 1000, or greater than 2000. The PCR may have a count of defect with an equivalent circular diameter in the range of 400-800 µm (per 24.6 cm³ of film) greater than 250, or greater than 400, or greater than 500, or greater than 1000. In contrast, a typical virgin resin has a defect count of 200-400 µm (per 24.6 cm³ of film) less than 100 and a defect count of 400-800 µm (per 24.6 cm³ of film) less than 100. PCRs have a higher defect count due to contamination and because the materials have been made into an article, used, and recovered. The processing means that the material has gone through at least two or at least three prior thermal cycles of heating and cooling.

### Virgin Bimodal Polyethylene

The virgin bimodal polyethylene comprises a density from 0.905 to 0.935 gram per cubic centimeter (g/cm³) measured according to ASTM D792-13, alternatively from 0.905 to 0.930 g/cm³, alternatively from 0.910 to 0.925 g/cm³, alternatively from 0.905 to 0.925 g/cm³, alternatively from 0.905 to 0.920 g/cm3, alternatively from 0.910 to 0.925 g/cm3, Method B.

The virgin bimodal polyethylene has a melt index (I₂) from 0.1 grams per 10 minutes (g/10 min.) to 1 g/10 min., alternatively from 0.1 to 0.8 g/10 min. alternatively from 0.1 to 0.5 g/10 min., alternatively from 0.1 to 0.4 g/10 min., as measured according to the Melt Index (MI) Test Method at 190 °C and 2.16 kilograms according to ASTM D1238-13.

The virgin bimodal polyethylene may have an M_{z(Abs)} from 600,000 to 800,000 grams per mole (g/mol), alternatively from 600,000 to 750,000 g/mol, alternatively from 600,000 to 700,000 g/mol, wherein M_{z(Abs)} is z-average molecular weight as measured according to Gel Permeation Chromatography (GPC) Absolute.

The virgin bimodal polyethylene may have a shear thinning index (SHI) from 4 to 10 *(1.0)/(100), alternatively from 5 to 10 *(1.0)/(100), alternatively from 5 to 8 *(1.0)/(100), alternatively from 5 to 7 *(1.0)/(100) measured according to SHI Test Method.

The virgin bimodal polyethylene is defined by a first melt flow ratio (MFR₂₁=I₂₁/I₂) greater than or equal to 30 to less than 70, alternatively from 30 to 65, alternatively from 30 to 60, alternatively from 30 to 50, alternatively from 32 to 48, alternatively from 32 to 45, alternatively from 32 to 40, alternatively from 35 to 40, measured according to the MI Test Method at 190 °C and 21.6 and 2.16 kilograms, respectively, according to ASTM D1238-13.

The virgin bimodal polyethylene may be further defined by a first molecular weight ratio (M_{z(Abs)}/M_{w(Abs)}) of less than or equal to 5, alternatively from 2 to 5, alternatively from 3 to 4.5, alternatively 4 to 4.5, wherein M_{z(Abs)} is z-average molecular weight and M_{w(Abs)} is weight-average molecular weight as measured according to GPC Absolute.

The virgin bimodal polyethylene may include a M_{n(Abs)} from 15,000 to 28,000 grams per mole (g/mol), alternatively from 15,000 to 25,000 g/mol, alternatively from 15,000 to 20,000 g/mol, alternatively from 16,000 to 18,000 g/mol as measured according to the GPC Test Method. The virgin bimodal polyethylene may include a M_{w(Abs)} from 120,000 to 160,000 g/mol, alternatively from 130,000 to 160,000 g/mol, alternatively from 140,000 to 160,000 g/mol, alternatively from 150,000 to 160,000 g/mol as measured according to the GPC Absolute. The virgin bimodal polyethylene may include a tan delta (tan δ) of at least 3, or from 3 to 4, as measured at 190 °C and a frequency of 0.1000 radians per second (rad/s) according to Tan Delta (Tan δ) Test Method

The virgin bimodal polyethylene may have a molecular mass dispersity (M_{w(Abs)}/M_{n(Abs)}), which may be referred to as molecular weight distribution, from 7 to 10, from 8 to 10, from 9 to 10 as measured according to GPC Absolute. Moreover, the virgin bimodal polyethylene may be defined by a fraction less than or equal to 61% for the log(Mw(Abs))=5, wherein Mw(Abs) is measured by GPC, or less than 60%, or less than 59%.

The virgin bimodal polyethylene may include a number of short chain branches (SCB) per 1000 carbon atoms (C) measured according to the GPC Test Method. For example, the number of SCB per 1000 C is 15 to 40 percent greater at M_{w(Abs)} than at M_{n(Abs)}, or 20 to 35 percent greater at M_{w(Abs)} than at M_{n(Abs)}, 20 to 30 percent greater at M_{w(Abs)} than at M_{n(Abs)}. The virgin bimodal polyethylene may also be defined by a SCB/1000 Carbon value at M_{n(Abs)} of greater than 8, or greater than 10, or greater than 12 as measured using GPC.

The virgin bimodal polyethylene may also be defined by a ratio of M_{w(Conv)}/M_{n(Conv)} from 7.0 to 15.0, or alternatively from 8 to 14, or alternatively from 8 to 12, wherein M_{w(Conv)} is weight-average molecular weight and M_{n(Conv)} is number-average molecular weight, both measured by according to GPC conventional.

The virgin bimodal polyethylene may further be defined by an I5 value as measured according to ASTM D1238-13 of 1 to 3. The virgin bimodal polyethylene may have an I21/I5 value of 7.5 to 15, 9 to 13.5, or 9 to 11.

The virgin bimodal polyethylene resin has an improved comonomer content distribution (iCCD) wt. fraction greater than 30 wt.% at a temperature range of 35 to 90 °C. For example the virgin bimodal polyethylene resin may have an iCCD wt. fraction greater than 60 wt.%, greater than 70 wt.%, greater than 75 wt.%, greater than 80 wt.%, greater than 85 wt.%, greater than 90 wt.%, or even greater than 95 wt.%. The iCCD wt. fraction at a temperature range of 35 to 90 °C may be defined as a ratio of the mass eluted at temperatures from 35 °C to 90 °C for the virgin bimodal polyethylene resin to the total mass eluted for the virgin bimodal polyethylene resin when measured using an iCCD curve of mass eluted versus temperature.

The virgin bimodal polyethylene resin has an iCCD wt. fraction greater than 8 wt.% at a temperature range of 95 to 115 °C. For example, the virgin bimodal polyethylene resin may have an iCCD wt. fraction greater than 8 wt.%, greater than 10 wt.%, greater than 15 wt.%, from 8 wt.% to 12 wt.%, from 8 wt.% to 10 wt.% or any subset thereof. The iCCD wt. fraction at a temperature range of 95 to 115 °C may be defined as a ratio of the mass eluted at temperatures from 95 to 115 °C for the virgin bimodal polyethylene resin to the total mass eluted for the virgin bimodal polyethylene resin when measured using an iCCD curve of mass eluted versus temperature.

### Other Components of the Thermoplastic Composition

In further embodiments, the thermoplastic composition can comprise further components, such as, one or more additives. Potential additives include, but are not limited to, antistatic agents, color enhancers, dyes, lubricants, fillers, pigments, primary antioxidants, secondary antioxidants, processing aids, UV stabilizers, anti-blocks, slip agents, tackifiers, fire retardants, anti-microbial agents, odor reducer agents, anti-fungal agents, and combinations thereof. The polymer blend can contain from 0.01 or 0.1 or 1 to 5, 10, 15 wt.% of such additives, based on the total weight of the polymer blend.

As stated previously, the thermoplastic composition may be incorporated into various products. In one embodiment, this product may be a pellet.

In further embodiments, the thermoplastic composition may be incorporated into at least one layer of a film. The film may be a monolayer or multilayer film. Useful films according to embodiments of the present disclosure include cast, blown, and calendered (including multi-layer films, greenhouse films, shrink films including clarity shrink film, lamination film, biaxially-oriented film, extrusion coating, liners, clarity liners, overwrap film and agricultural film). Monolayer and multilayer films may be made according to the film and fabrication methods described in USP 5,685,128.

### Films

The films according to embodiments of the present disclosure may be films or sheets (i.e., the term film or films, as used herein, includes a sheet or sheets). These films may be used to form unitizing films, shrink films, lamination films, liner films, consumer bags, agriculture films, food packaging films, beverage packaging films, or shipping sacks. It is noted however, that this is merely an illustrative implementation of the embodiments disclosed herein. The embodiments are applicable to other technologies that are susceptible to similar problems as those discussed above.

When formed into a film, the thermoplastic film of the present disclosure can be a more sustainable way of producing a film, and can also provide a number of other advantages. For example, while providing a sustainable formulation for forming a film, the films, in some embodiments of the present disclosure, maintain or minimize the reduction of films properties such as elastic recovery, toughness, stiffness, or photodegradability. The advantages of a sustainable film with effective performance provides alternatives to existing film structures where, for example, elastic recovery is a desired property.

In embodiments, the film formed from the polymer blend has a thickness in the range of from 12.7 to 508 µm (0.5 to 20 mils). All individual values and subranges of from 12.7 to 508 µm (0.5 to 20 mils) are disclosed and included herein; for example, the film formed from the polymer blend can have a thickness of from 1 to 20 mils, from 1 to 18 mils, from 1 to 16 mils, from 1 to 14 mils, from 25.4 to 304.8 µm (1 to 12 mils), from 25.4 to 254 µm (1 to 10 mils), from 25.4 to 203.2 µm (1 to 8 mils), from 25.4 to 152.4 µm (1 to 6 mils), 127 to 508 µm (5 to 20 mils), from 127 to 457.2 µm (5 to 18 mils), from 127 to 406.4 µm (5 to 16 mils), from 127 to 355.6 µm (5 to 14 mils), from 127 to 304.8 µm (5 to 12 mils), from 127 to 254 µm (5 to 10 mils), from 127 to 203.2 µm (5 to 8 mils), from 127 to 152.4 µm (5 to 6 mils), from 203.2 to 508 µm (8 to 20 mils), from 203.2 to 457.2 µm (8 to 18 mils), from 203.2 to 406.4 µm (8 to 16 mils), from 203.2 to 355.6 µm (8 to 14 mils), from 203.2 to 304.8 µm (8 to 12 mils), from 203.2 to 254 µm (8 to 10 mils), from 254 to 508 µm (10 to 20 mils), from 254 to 457.2 µm (10 to 18 mils), from 254 to 406.4 µm (10 to 16 mils), from 254 to 355.6 µm (10 to 14 mils), from 254 to 304.8 µm (10 to 12 mils), from 304.8 to 508 µm (12 to 20 mills), from 304.8 to 457.2 µm (12 to 18 mils), from 304.8 to 406.4 µm (12 to 16 mils), from 304.8 to 355.6 µm (12 to 14 mils), from 355.6 to 508 µm (14 to 20 mils), from 355.6 to 457.2 µm (14 to 18 mils), from 355.6 to 406.4 µm (14 to 16 mils), from 406.4 to 508 µm (16 to 20 mils), from 406.4 to 457.2 µm (16 to 18 mils), or from 457.2 to 508 µm (18 to 20 mils).

In embodiments, the film is a monolayer film. In such embodiments, the components of the polymer blend are blended with one another and optional other components (e.g., other polymers or additives) in any conventional manner (e.g., dry blending, in reactor mixing, or compounding) and subsequently melt mixing either directly in the extruder to make the film or pre-melt mixing in a separate extruder, and fabricating into a film using any film producing process, such as blown film or cast film.

The films according to embodiments of the present disclosure have many utilities and can be formed into a variety of articles. For examples, the films according to embodiments of the present disclosure can be over-wrapping films such as tissue over-wraps, bundled bottled water over-wraps; clarity films such as candy bags, bread bags, envelope window films; food and specialty packaging films, such as produce bags, meat wraps, cheese wraps, beverage holders; and pouches such as milk pouches or bags-in-box such as wine.

As noted above, the films of this invention may be made by conventional fabrication techniques, e.g., simple bubble extrusion, biaxial orientation processes (such as tenter frames or double bubble processes), simple cast/sheet extrusion, co-extrusion, lamination, etc.

Extrusion coating is another technique for producing films. Similar to cast film, extrusion coating is a flat die technique. A film can be extrusion coated or laminated onto a substrate either in the form of a monolayer or a coextruded film.

### TEST METHODS

Melt Strength Test Method. The melt Strength (MS) measurements were conducted on a Gottfert Rheotens 71.97 (Gottfert Inc.; Rock Hill, S.C.) attached to a Gottfert Rheotester 2000 or Rheograph 25 capillary rheometer. A polymer melt (about 20-30 grams, pellets) was extruded through a capillary die with a flat entrance angle (180 degrees) with a capillary diameter of 2.0 mm and an aspect ratio (capillary length/capillary diameter) of 15. After equilibrating the samples at 190 °C for 10 minutes, the piston was run at a constant speed to achieve an apparent wall shear rate of 38.16s⁻¹. The standard test temperature was 190 °C. The sample was drawn uniaxially to a set of accelerating nips located 100 mm below the die, with an acceleration of 2.4 mm/s². Note that the spacing between these wheels are 0.4 mm. The tensile force was recorded as a function of the take-up speed of the nip rolls. Melt strength was reported as the plateau force (cN) before the strand broke. The following conditions were used in the melt strength measurements: apparent wall sear rate = 38.16s⁻¹; wheel acceleration=2.4 mm/s²; capillary diameter=2.0 mm; and capillary length=30 mm

Density was measured according to ASTM D792-13, *Standard Test Methods for Density and Specific Gravity (Relative Density) of Plastics by Displacement,* Method B (for testing solid plastics in liquids other than water, e.g., in liquid 2-propanol). Results were reported in units of grams per cubic centimeter (g/cm³).

Melt Index (190 °C, 2.16 kg, "I₂") Test Method: ASTM D 1238-13, *Standard Test Method for Melt Flow Rates of Thermoplastics by Extrusion Plastometer,* using conditions of 190 °C/2.16 kilograms (kg). Results were reported in units of grams eluted per 10 minutes (g/10 min.) or the equivalent in decigrams per 1.0 minute (dg/1 min.).

Flow Index (190 °C, 21.6 kg, "l₂₁") Test Method: ASTM D 1238-13, *Standard Test Method for Melt Flow Rates of Thermoplastics by Extrusion Platometer,* using conditions of 190 °C/21.6 kilograms (kg). Results were reported in grams eluted per 10 minutes (g/10 min.) or the equivalent in decigrams per 1.0 minute (dg/1 min.).

Flow Rate (190 °C, 5.0 kg, "I₅ ") Test Method: ASTM D 1238-13, using conditions of 190 °C/5.0 kg. Results were reported in units of grams eluted per 10 minutes (g/10 min.) or the equivalent in decigrams per 1.0 minute (dg/1 min.).

Gel permeation chromatography (GPC) Test Method for measuring molecular weights using a concentration-based detector (conventional GPC or "GPC_{conv}") was calculated using the following procedure. Use a PolymerChar GPC-IR (Valencia, Spain) high temperature GPC chromatograph equipped with an internal IR5 infra-red detector (IR5, measurement channel). Set temperatures of the autosampler oven compartment at 160° C. and column compartment at 150° C. Use a column set of four Agilent "Mixed A" 30cm 20-micron linear mixed-bed columns; solvent is 1,2,4 trichlorobenzene (TCB) that contains 200 ppm of butylated hydroxytoluene (BHT) sparged with nitrogen. Injection volume is 200 microliters. Set flow rate to 1.0 milliliter/minute. Calibrate the column set with 21 narrow molecular weight distribution polystyrene (PS) standards (Agilent Technologies) with molecular weights ranging from 580 to 8,400,000. The PS standards were arranged in six "cocktail" mixtures with approximately a decade of separation between individual molecular weights in each vial. The polystyrene standards were prepared at 0.025 grams in 50 milliliters of solvent for molecular weights equal to or greater than 1,000,000, and 0.05 grams in 50 milliliters of solvent for molecular weights less than 1,000,000. The polystyrene standards were dissolved at 80 degrees Celsius with gentle agitation for 30 minutes. Convert the PS standard peak molecular weights ("MPS") to polyethylene molecular weights ("MPE") using the method described in Williams and Ward, J. Polym. Sci., Polym. Let., 6, 621 (1968) and Equation 1: (M*_{polyethylene} =* A x (M*_{polystyrene}*)^{B}, wherein M*_{polyethylene}* is molecular weight of polyethylene, M*_{polystyrene}* is molecular weight of polystyrene, A = 0.4315, x indicates multiplication, and B = 1.0. Dissolve samples at 2 mg/mL in TCB solvent at 160° C for 2 hours under low-speed shaking. Generate a baseline-subtracted infra-red (IR) chromatogram at each equally-spaced data collection point (i), and obtain polyethylene equivalent molecular weight from a narrow standard calibration curve for each point (i) from Equation 1.

The total plate count of the GPC column set is performed with decane without further dilution. The plate count (Equation 2) and symmetry (Equation 3) are measured on a 200 microliter injection according to the following equations.$Plate Count = 5.54 ∗ {\left(\frac{\left({RV}_{Peak Max}\right.}{Peak Width at \frac{1}{2} height}\right)}^{2}$ (Equation 2).
where RV is the retention volume in milliliters, the peak width is in milliliters, the peak max is the maximum height of the peak, and ½ height is ½ height of the peak maximum.
$Symmetry = \frac{\left(Rear Peak {RV}_{one tenth height}-{RV}_{Peak max}\right)}{\left({RV}_{Peak Max}-Front Peak {RV}_{one tenth height}\right)}$ (Equation 3)
where RV is the retention volume in milliliters and the peak width is in milliliters, Peak max is the maximum position of the peak, one tenth height is 1/10 height of the peak maximum, and where rear peak refers to the peak tail at later retention volumes than the peak max and where front peak refers to the peak front at earlier retention volumes than the peak max. The plate count for the chromatographic system should be greater than 18,000 and symmetry should be between 0.98 and 1.22.

Calculate number-average molecular weight (referred to as M_{n(GPC)} or *Mₙ(Conv)),* weight-average molecular weight (referred to as M_{w(GPC)} or *M_{w}(Conv))* and z-average molecular weight (referred to as M_{z(GPC)} or *M_{z}(Conv))* based on GPC results using the internal IR5 detector (measurement channel) with PolymerChar GPCOne^{™} software and Equations 4 to 6, respectively, the baseline-subtracted IR chromatogram at each equally-spaced data collection point (i), and the polyethylene equivalent molecular weight obtained from the narrow standard calibration curve for the point (i) from Equation 1. Equation 4: ${Mn}_{\left(GPC\right)} = \frac{{Σ}^{i} {IR}_{i}}{{Σ}^{i} \left(\frac{{IR}_{i}}{{M}_{{polyethylene}_{i}}}\right)}$ Equation 5: ${Mw}_{\left(GPC\right)} = \frac{{Σ}^{i} \left({IR}_{i}∗{M}_{{polyethylene}_{i}}\right)}{{Σ}^{i} {IR}_{i}}$ Equation 6: ${Mz}_{\left(GPC\right)} = \frac{{Σ}^{i} \left({IR}_{i}∗{{M}_{{polyethylene}_{i}}}^{2}\right)}{{Σ}^{i} \left({IR}_{i}∗{M}_{{polyethylene}_{i}}\right)}$

Monitor effective flow rate over time using decane as a nominal flow rate marker during sample runs. Look for deviations from the nominal decane flow rate obtained during narrow standards calibration runs. If necessary, adjust the effective flow rate of decane so as to stay within ± 2%, alternatively ± 1 %, of the nominal flow rate of decane as calculated according to Equation 7: Flow rate(effective) = Flow rate(nominal) * (RV_{(FM} Calculated) / RV_{(FM} Sample), wherein Flow rate(effective) is the effective flow rate of decane, Flowrate(nominal) is the nominal flow rate of decane, RV_{(FM} Calibrated) is retention volume of flow rate marker decane calculated for column calibration run using narrow standards, RV_{(FM} Sample) is retention volume of flow rate marker decane calculated from sample run, * indicates mathematical multiplication, and / indicates mathematical division. Discard any molecular weight data from a sample run with a decane flow rate deviation more than ± 2%, alternatively ± 1 %.

Gel Permeation Chromatography Test Method for measuring absolute molecular weight measurements (absolute GPC or "GPC_{abs}") was calculated using the following procedure. Use the PolymerChar GPC-IR high temperature GPC chromatograph equipped with the internal IR5 infra-red detector (IR5), wherein the IR5 detector is coupled to a Precision Detectors (Now Agilent Technologies) 2-angle laser light scattering (LS) detector Model 2040. For all Light scattering measurements, the 15 degree angle is used for measurement purposes.

For the determination of the viscometer and light scattering detector offsets from the IR5 detector, the Systematic Approach for the determination of multi-detector offsets is done in a manner consistent with that published by Balke, Mourey, et. al. (Mourey and Balke, Chromatography Polym. Chapter 12, (1992)) (Balke, Thitiratsakul, Lew, Cheung, Mourey, Chromatography Polym. Chapter 13, (1992)), optimizing triple detector log (MW and IV) results from a broad homopolymer polyethylene standard (Mw/Mn > 3) to the narrow standard column calibration results from the narrow standards calibration curve using PolymerChar GPCOne^{™} Software.

The absolute molecular weight data are obtained in a manner consistent with that published by Zimm (Zimm, B.H., J. Chem. Phys., 16, 1099 (1948)) and Kratochvil (Kratochvil, P., Classical Light Scattering from Polymer Solutions, Elsevier, Oxford, NY (1987)) using PolymerChar GPCOne^{™} software. The overall injected concentration, used in the determination of the molecular weight, was obtained from the mass detector area and the mass detector constant, derived from a suitable linear polyethylene homopolymer, or one of the polyethylene standards of known weight-average molecular weight. The calculated molecular weights (using GPCOne^{™}) were obtained using a light scattering constant, derived from one or more of the polyethylene standards mentioned below, and a refractive index concentration coefficient, dn/dc, of 0.104. Generally, the mass detector response (IR5) and the light scattering constant (determined using GPCOne^{™}) should be determined from a linear standard with a molecular weight in excess of about 50,000 g/mole. The viscometer calibration (determined using GPCOne^{™}) can be accomplished using the methods described by the manufacturer, or, alternatively, by using the published values of suitable linear standards, such as Standard Reference Materials (SRM) 1475a (available from National Institute of Standards and Technology (NIST)). A viscometer constant (obtained using GPCOne^{™}) is calculated which relates specific viscosity area (DV) and injected mass for the calibration standard to its intrinsic viscosity. The chromatographic concentrations are assumed low enough to eliminate addressing 2nd viral coefficient effects (concentration effects on molecular weight).

Absolute weight-average molecular weight (MW_{(Abs)}) is obtained (using GPCOne^{™}) from the Area of the Light Scattering (LS) integrated chromatogram (factored by the light scattering constant) divided by the mass recovered from the mass constant and the mass detector (IR5) area. The molecular weight and intrinsic viscosity responses are linearly extrapolated at chromatographic ends where signal to noise becomes low (using GPCOne^{™}).

Absolute number-average molecular weight (Mn_{(Abs)}) and absolute z-average molecular weight (Mz_{(Abs)}) are calculated according to Equations 8-9 as follows:
${Mn}_{\left(Abs\right)} = \frac{{Σ}^{i} {IR}_{i}}{{Σ}^{i} \left(\frac{{IR}_{i}}{{M}_{{Absolute}_{i}}}\right)}$ (Equation 8).
${Mz}_{\left(Abs\right)} = \frac{{Σ}^{i} \left({IR}_{i}∗{{M}_{{Absolute}_{i}}}^{2}\right)}{{Σ}^{i} \left({IR}_{i}∗{M}_{{Absolute}_{i}}\right)}$ (Equation 9).

Comonomer content with respect to polymer molecular weight was determined by use of an infrared detector such as an IR5 detector in the GPC measurement. Calibration and measurement of the comonomer content was done as described in Analytical Chemistry 2014, 86(17), 8649-8656. *"*Toward Absolute Chemical Composition Distribution Measurement of Polyolefins by High-Temperature Liquid Chromatography Hyphenated with Infrared Absorbance and Light Scattering Detectors" by Dean Lee, Colin Li Pi Shan, David M. Meunier, John W. Lyons, Rongjuan Cong, and A. Willem deGroot. Analytical Chemistry 2014 86 (17), 8649-8656. Knowledge of the comonomer type and its molecular weight permits the determination of the short chain branching frequency (SCB/1000 C), where total C = carbons in backbone + carbons in branches. End-Group correction of the comonomer data can be made via knowledge of the termination mechanism if there is significant spectral overlap with the comonomer termination (methyls) via the molecular weight determined at each chromatographic slice.

Secant modulus was measured as follows. The film sample is conditioned for at least 40 hours at 23 °C (± 2 °C) and 50% R.H (± 10 %) before the test which is conducted at 23 °C (± 2 °C) and 50% R.H (± 10 %). Film strips of dimension 1" wide by 8" long are cut from a film in the desired direction (machine (MD) and the cross directions (CD)). The specimens are loaded onto a tensile testing frame using line grip jaws (flat rubber on one side of the jaw and a line grip on the other) set at a gauge length of 4". The specimens are then strained at a crosshead speed of 2 in./min up to a nominal strain of 5%. The secant modulus is measured at a specified strain and is the ratio of the stress at the specified strain to the specified strain, as determined from the load - extension curve. Typically, secant modulus at 1% and 2% strain are calculated. Five replicates are typically tested for each sample.

Shear Thinning Index (SHI) Test Method: Perform small-strain (10%) oscillatory shear measurements on polymer melts at 190 °C using an ARES-G2 Advanced Rheometric Expansion System, from TA Instruments, with parallel-plate geometry to obtain the values of storage modulus (G'), loss modulus (G") complex modulus (G*) and complex viscosity (η**) as a function of frequency (ω). Obtain a SHI value by calculating the complex viscosities at given values of complex modulus and calculating the ratio of the two viscosities. For example, using the values of complex modulus of 1 kilopascal (kPa) and 100 kPa, obtain the η*(1.0 kPa) and η*(100 kPa) at a constant value of complex modulus of 1.0 kPa and 100 kPa, respectively. The SHI (1/100) is defined as the ratio of the two viscosities η*(1.0 kPa) and η*(100 kPa), *i.e*., η*(1.0)/ η*(100).

Tan Delta (Tan δ) Test Method: a dynamic mechanical analysis (DMA) method measured at 190 °C and 0.1radians per second (rad/s) using the following procedure: Perform small-strain (10%) oscillatory shear measurements on polymer melts at 190 °C using an ARES-G2 Advanced Rheometric Expansion System, from TA Instruments, with parallel-plate geometry to obtain the values of storage modulus (G'), loss modulus (G") complex modulus (G*) and complex viscosity (η*) as a function of frequency (ω). A tan delta (δ) at a particular frequency (ω) is defined as the ratio of loss modulus (G") to storage modulus (G') obtained at that frequency (ω), *i.e.* tan δ = G"/G'.

Film Puncture Test Method: ASTM D5748 - 95(2012), *Standard Test Method for Protrusion Puncture Resistance of Stretch Wrap Film.*

Puncture was determined by a probe impinging the film at a standard speed such as 10 inches/min (in/min.). The probe imparts a biaxial stress to the clamped film that is representative of the type of stress encountered by films in many product end-use applications. This resistance is a measure of the energy-absorbing ability of a film to resist puncture under these conditions. The probe was coated with a polytetrafluoroethylene and has an outer diameter of 1.905 cm (0.75 inch), per ASTM D5748. The film is clamped in a 4" diameter circular specimen holder during the test. The probe eventually penetrates or breaks the clamped film. The peak force at break, the maximum force, energy (work) to break or penetrate the clamped film, and the distance that the probe has penetrated at break, are recorded using mechanical testing software. Puncture strength, i.e. the energy per unit volume, is expressed in meter-kilogram force per cubic cm (foot-pound force per cubic inch (ft*Ibf/in³)).

Differential Scanning Calorimetry (DSC) was used to measure the melting and crystallization behavior of a polymer over a wide range of temperatures. For example, the TA Instruments Q1000 DSC, equipped with an RCS (refrigerated cooling system) and an autosampler was used to perform this analysis. During testing, a nitrogen purge gas flow of 50 ml/min was used. Each sample was melt pressed into a thin film at about 190°C; the melted sample was then air-cooled to room temperature (approx. 25°C). The film sample was formed by pressing a "0.1 to 0.2 gram" sample at 190°C at 172.4 MPa (25,000 psi), and 10 seconds, to form a "2.54 to 5.08 µm (0.1 to 0.2 mil) thick" film. A 3-10 mg, 6 mm diameter specimen was extracted from the cooled polymer, weighed, placed in a light aluminum pan (about 50 mg), and tightly fitted. Analysis was then performed to determine its thermal properties.

The thermal behavior of the sample was determined by ramping the sample temperature up and down to create a heat flow versus temperature profile. First, the sample was rapidly heated to 180°C, and held isothermal for five minutes, in order to remove its thermal history. Next, the sample was cooled to -40°C, at a 10°C/minute cooling rate, and held isothermal at -40 °C for five minutes. The sample was then heated to 150°C (this is the "second heat" ramp) at a 10°C/minute heating rate. The cooling and second heating curves were recorded. The cool curve was analyzed by setting baseline endpoints from the beginning of crystallization to -20°C. The heat curve was analyzed by setting baseline endpoints from -20°C to the end of melt. The values determined were peak melting temperatures (Tₘ), peak crystallization temperatures (T_{c}), and heat of fusion (H_{f}) (in Joules per gram).

Instrumented dart impact (IDI) testing follows and is compliant with ASTM D7192. The probe used is stainless steel, polished to a mirror finish, striking the film at 3.3 m/s. Force versus displacement curves, peak force, peak energy, displacement and total energy are reported.

Improved methods for comonomer content distribution (iCCD) analysis was, developed in 2015 (Cong and Parrott et al., WO2017040127A1), performed with Crystallization Elution Fractionation instrumentation (CEF) (PolymerChar, Spain) equipped with a IR-5 detector (PolymerChar, Spain) and two angle light scattering detector Model 2040 (Precision Detectors, currently Agilent Technologies). Ortho-dichlorobenzene (ODCB, 99% anhydrous grade or technical grade) was used. Silica gel 40 (particle size 0.2~0.5 mm, catalogue number 10181-3) from EMD Chemicals was obtained (can be used to pack into columns to further purify ODCB, the packed columns are installed after outlet of Agilent pump). The CEF instrument is equipped with an autosampler with N2 purging capability. ODCB is sparged with dried nitrogen (N2) for one hour before use. Sample preparation was done with autosampler at 4 mg/mL (unless otherwise specified) under shaking at 160 °C for 1 hour. The injection volume was 300 µL. The temperature profile of iCCD was: crystallization at 3 °C/min from 105 °C to 30 °C, the thermal equilibrium at 30 °C for 2 minute (including Soluble Fraction Elution Time being set as 2 minutes), and elution at 3 °C/min from 30 °C to 140 °C. The flow rate during crystallization is 0.0 mL/min. The flow rate during elution is 0.50 mL/min. The data was collected at one data point/second.

The iCCD column was packed with gold coated nickel particles (Bright 7GNM8-NiS, Nippon Chemical Industrial Co.) in a 15 cm (length) by 1/4" (ID) (0.635 cm) stainless tubing. The column packing and conditioning were with a slurry method according to the reference (Cong, R.; Parrott, A.; Hollis, C.; Cheatham, M., US Publication US20180172648A1). The final pressure with TCB slurry packing was 15 MPa (150 Bars).

Column temperature calibration was performed by using a mixture of the Reference Material Linear homopolymer polyethylene (having zero comonomer content, Melt index (I2) of 1.0, polydispersity Mw/Mn approximately 2.6 by conventional gel permeation chromatography, 1.0 mg/mL) and Eicosane (2 mg/mL) in ODCB. The iCCD temperature calibration consisted of four steps: (1) Calculating the delay volume defined as the temperature offset between the measured peak elution temperature of Eicosane minus 30.00 °C; (2) Subtracting the temperature offset of the elution temperature from the iCCD raw temperature data. It is noted that this temperature offset is a function of experimental conditions, such as elution temperature, elution flow rate, etc.; (3) Creating a linear calibration line transforming the elution temperature across a range of 30.00 °C and 140.00 °C so that the linear homopolymer polyethylene reference had a peak temperature at 101.0 °C, and Eicosane had a peak temperature of 30.0 °C; (4) For the soluble fraction measured isothermally at 30 °C, the elution temperature below 30.0 °C is extrapolated linearly by using the elution heating rate of 3 °C/min according to the reference (US20180172648A1).

The comonomer content versus elution temperature of iCCD was constructed by using 12 reference materials (ethylene homopolymer and ethylene-octene random copolymer made with single site metallocene catalyst, having ethylene equivalent weight average molecular weight ranging from 35,000 to 128,000 g/mol). All of these reference materials were analyzed in the same way as specified previously at 4 mg/mL. The modeling of the reported elution peak temperatures as a function of octene mole% using linear regression resulted in the following equation for which R² was 0.978. The elution peak is the temperature with the highest weight fraction eluting.$\left(Elution Temperature in Degrees C\right) = -6 . 3515 \left(comonomer Mol%\right) + 101.000$

The Defect Count is a measure of defects that are detected in an extruded film using optical imaging technology according the practices and guidance in ASTM D7310-20 "Standard Practice for Defect Detection and Rating of Plastic Film Using Optical Sensors." The Defect Count is reported as the number of optical defects per 24.6 cm³ with an effective circular diameter within defined series of ranges: 200-400µm, 400-800µm, 800-1600µm, 1600µm and above. It is measured by an Optical Control Systems Film Surface Analyzer FSA100 (OCS FSA100) optical imaging system. The OCS FSA100 optical imaging system consists of a lighting unit, a CCD line scan camera, and a computer with image/data analysis software version 5.0.4.6.

The OCS FSA100 optical imaging system detects defects as they obscure the transmission of halogen-based source light. Average greyscale was set to 170 with a threshold sensitivity setting of 35%. Additionally, the gain of the CCD system may be adjusted to compensate for film haziness. The imaging system creates a composite area of each defect by adding the defective pixels from each subsequent line scan. The system then reports the number of defects which were in user defined size ranges, based on the diameter of circles having equivalent areas.

Film fabrication is accomplished by an OCS ME19 cast film extrusion system equipped with a fixed lip coat hanger die. Die gap is 500 µm by 15 cm. It is a single screw extruder equipped with a 19mm screw provided by OCS. The screw design is a 3:1 L/D compression ratio with a pineapple mixing tip. Total extrusion system mass output is 10 ± 5 kg / hour. Film thickness was 38µm, which was achieved via adjustment of the chill roll. A nitrogen purge was used at the feed throat of the extruder. Temperature profiles ranged from 135 °C - 190 °C to achieve a target extrusion pressure of 22-24 MPa (220-240Bar).

PCR resin was analyzed neat unless it was not possible to be extruded at 100% on the OCS system. If the PCR resin could not be processed neat it was diluted (50/50 Wt%) with virgin PE material in dry blend prior to extrusion. The virgin polyethylene used for dilution was an LDPE with a melt index in the range of 0.2-1 g/10 min (190 °C), and a density in the range of 0.919-0.923 g/cm³. (e.g. DOW Polyethylene 132I Low Density, hereafter referred to as LDPE 132I)

### EXAMPLES

The following examples illustrate one or more features of the compositions of the present disclosure.

NATURA PCR-LDPCR-100/200 (hereafter referred to as AV100) from Avangard Innovative was used in the experimental resins detailed below. The Melt Index I₂ (190 °C) of AV100 is 1.8-2.8 g/10min and the density is 0.910-0.925 g/cm³. According to DSC analysis, the 2^{nd} heat of fusion is 141.05 J/g with a standard deviation of 4.25 J/g. Based on defect count, AV100 has a defect count in the 200-400 µm range of greater than 500 per 24.6 cm³ of film and a defect count in 400-800 µm range of greater than 250 per 24.6 cm³ of film.

The following bimodal virgin bimodal polyethylene materials or PCR pellets listed in Tables 1A-1C are used in the examples.

**Table 1A**

| **Sample** | **Density (g/cc)** | **Melt Index (I2) (dg/ min)** | **Melt Index (I21) (dg/ min)** | **Melt Index (I5) (dg/ min)** | **Melt Index (110) (dg/ min)** | **I21/I2** | **Melt Strength (cN)** | **ICCD wt fraction 95-115 °C** | **ICCD wt fraction 35-90 °C** |
|---|---|---|---|---|---|---|---|---|---|
| Comparative Example A (CEA) | 0.919 | 0.34 | 25.5 | 1.19 | - | 79.9 | 7.2 | 6.1% | 85.0% |
| Comparative Example B (CEB) | 0.920 | 0.31 | 25.1 | 1.55 | - | 76.6 | 9.8 | Not measured | Not measured |
| Inventive Example 1 (IE1) | 0.920 | 0.32 | 12.0 | 1.10 | - | 37.6 | 8.9 | 9.4% | 76.8% |
| PCR Pellet | - | 2.26 | - | - | 18.1 | - | - | - | - |

**Table 1B**

| **Sample** | **Mn (Abs) (g/mol)** | **Mw (Abs) (g/mol)** | **Mz (Abs) (g/mol)** | **Mw(Abs)/ Mn(Abs)** | **Fraction of log (MW)* ≤ 5** | **SCB per 1000C @ Mn (Abs)** | **SCB per 1000C @ Mw (Abs)** | **SHI (1/100)** | **tan δ @ 0.1 rad/sec** |
|---|---|---|---|---|---|---|---|---|---|
| Comparative Example A (CEA) | 12,678 | 165,696 | 807,205 | 13.1 | 63% | 14.9 | 21.4 | 11.7 | 3.0 |
| Comparative Example B (CEB) | 28,681 | 173,514 | 1,120,515 | 6.0 | 68% | 13.0 | 19.5 | 31.5 | 1.7 |
| Inventive Example 1 (IE1) | 15,864 | 162,265 | 659,686 | 10.2 | 58% | 15.7 | 19.3 | 6.0 | 3.0 |

| | | | | | | | | | |
|---|---|---|---|---|---|---|---|---|---|
| ***Where MW = molecular weight measured in GPC(Abs)** | | | | | | | | | |

**Table 1C**

| **Sample** | **Mn(Conv) (g/mol)** | **Mw(Conv) (g/mol)** | **Mz(Conv) (g/mol)** | **Mw(Conv)/ Mn(Conv)** |
|---|---|---|---|---|
| Comparative Example A (CEA) | 13,831 | 164,788 | 879,591 | 11.9 |
| Comparative Example B (CEB) | 29,002 | 187,732 | 1,876,141 | 6.5 |
| Inventive Example 1 (IE1) | 17,134 | 158,423 | 655,534 | 9.2 |

**Table 2 DSC Data**

| **Sample** | **Tm1 (°C)** | **Tm2 (°C)** | **Tm2** - **Tm1 (°C)** |
|---|---|---|---|
| PCR Pellet | 122.2 | 109.6 | 12.6 |
| Comparative Example A (CEA ) | 115.3 | - | - |
| Comparative Example B (CEB) | 115.7 | - | - |
| Inventive Example 1 (IE1) | 119.1 | - | - |

### Process Details

Catalyst system 1 ("CAT1") comprised Univation's PRODIGY^{™} 200 catalyst spray-dried onto CAB-O-SIL TS610, a hydrophobic fumed silica made by surface treating hydrophilic (untreated) fumed silica with dimethyldichlorosilane support, and methylaluminoxane (MAO), and fed into a gas phase polymerization reactor as a 20.0 weight percent slurry in mineral oil.

Catalyst system 2 ("CAT2") is made from bis(2-pentamethylphenylamido)ethyl)amine zirconium dibenzyl and (1,3-dimethyltetrahydroindenyl)(methylcyclopentadienyl) zirconium dimethyl spray-dried in a 3:1 molar ratio onto CAB-O-SIL TS610, a hydrophobic fumed silica made by surface treating hydrophilic (untreated) fumed silica with dimethyldichlorosilane support, and methylaluminoxane (MAO), and fed into a gas phase polymerization reactor as a 20.9 weight percent slurry in mineral oil. The molar ratio of moles MAO to (moles of bis(2-pentamethylphenylamido)ethyl)amine zirconium dibenzyl + moles (tetramethylcyclopentadienyl)(npropylcyclopentadienyl) zirconium dichloride) was 148:1.

Trim solution 1 ("Trim1") is made from tetramethyl-cyclopentadienyl)(n-propylcyclopentadienyl) zirconium dimethyl (procatalyst) dissolved in isopentane to give a solution having 0.04 weight percent procatalyst.

Trim solution 2 ("Trim2") is made from (1,3-dimethyl-tetrahydroindenyl)(methylcyclopentadienyl) zirconium dimethyl (procatalyst) dissolved in isopentane to give a solution having 0.04 weight percent procatalyst.

Inventive Examples CEA, CEB and IE1 were produced in separate polymerization reaction runs in a single, continuous mode, gas phase fluidized bed reactor. The fluidized bed reactor was configured with a plurality of gas feed inlets and catalyst feed inlets and a product discharge outlet. The polymerization reaction used CAT1 or CAT2, Trim1 or Trim2, ethylene ("C2"), a comonomer, ICA1, and H2 gas. The Trim solutions were used to adjust the melt index properties of the embodiment of the virgin bimodal copolymer. In an experimental run, the reactor was preloaded before startup with seedbed comprising granular resin. First, the gaseous atmosphere in the reactor containing the preloaded seedbed was dried using high purity anhydrous molecular nitrogen gas to a moisture content below 5 ppm moisture. Then feed gases of ethylene ("C2"), comonomer, molecular hydrogen gas ("H2"), and ICA1 (isopentane) were introduced to build gas phase conditions in the reactor to desired operating gas phase conditions, while the reactor was heated up to the desired operating temperature. The operating gas phase conditions were maintained in the reactor at a partial pressure of ethylene in the reactor of 1500 kPa (220 psia) and by metering the gas feeds to the reactor at a molar ratio of comonomer/C₂, a molar ratio of H₂/C₂, and a mole percent (mol%) isopentane as listed later in Table 3. Then, a feed of the Trim solution was mixed with a feed of the catalyst (CAT1 or CAT2) to give a mixture thereof, which was then fed into the reactor, wherein mixing was performed at varying molar ratios to fine tune melt index and density properties.

**Table 3: Gas Phase Polymerization Conditions**

| | **CEA** | **CEB** | **IE1** |
|---|---|---|---|
| Catalyst | CAT1 | CAT1 | CAT2 |
| Trim Type | Trim1 | Trim1 | Trim2 |
| Catalyst Feed Rate, mL/hr | 1.6 | 2.7 | 4.5 |
| Trim Feed rate, mL/hr | 0 | 27.2 | 10.5 |
| Production Rate, kg/hr | 17.06 | 17.96 | 19.10 |
| Residence Time, hr | 2.30 | 2.20 | 2.10 |
| Reactor Bed Temp, °C | 80.00 | 80.00 | 78.00 |
| Bed weight, kg | 38.15 | 39.51 | 39.55 |
| FBD, kg/m3 (lb/ft3) | 192.2 (12.00) | 235.5 (14.70) | 233.9 (14.60) |
| Comonomer | Hexene | Hexene | Hexene |
| Cx/C2 Mole Ratio | 0.0385 | 0.040 | 0.0310 |
| Cx/C2 Flow Ratio, kg/kg | 0.087 | 0.080 | 0.071 |
| H2/C2 Mole Ratio | 0.0055 | 0.001 | 0.0110 |
| H2/C2 Flow Ratio, g/kg | 0.473 | 0.061 | 0.715 |
| APS, cm | 0.198 | 0.180 | 0.170 |
| Fines, wt% | 0.06 | 0.1 | 0.09 |

Referring to Table 4, monolayer blown films of 2.0 mil thickness targets were respectively made using a 2" die diameter blown film line. Gravimetric feeders dosed resin formulations into a Labtech LTE20-32 twin screw extruder at rate of 6.8 kg/hr (15 lbs/hr). From the extruder the resin formulation is conveyed into the 2" die diameter die with gap of 1.0mm. The LTE feed throat was set to 193°C and the remaining barrel, conveying portion, and die temperature were set and maintained to 215 °C. To produce films an output rate of 0.43 kg/hr/cm (2.4 lb/hr/in). of die circumference was targeted with pressurized ambient air inflating the film bubble to a 2.5 blow-up ratio. A dual lip air ring driven by a variable speed blower is used for all experiments. The frost line height (FLH) was maintained between 23.6 and 26.2 cm (9.3 and 10.3 inches). Film thickness was targeted at 50.8 µm (2 mils) and was controlled within ± 10% by adjusting the nip roller speed. The films are wound up into a roll. Instrumented Dart Impact Total Energy (J) and Instrumented Dart Impact Peak Force (N) were determined according to ASTM D3763-18.

**Table 4**

| **Film** | **Composition** | **Avg Secant Modulus at 2% (CD) (psi)** | **Avg Secant Modulus at 2% (MD) (psi)** | **IDI Total Energy (J)** | **Puncture (N)** |
|---|---|---|---|---|---|
| CFA | 75% CEA + 25% AV100 | 23424 | 21506 | 0.6 | 62.8 |
| CFB | 75% CEB + 25% AV100 | 22300 | 19010 | 0.5 | 74.4 |
| IF1 | 75% IE1 + 25% AV100 | 23191 | 26737 | 1.5 | 74.8 |
| CFC | 50% CEA + 50% AV100 | 20282 | 18563 | 0.42 | 63.2 |
| CFD | 50% CEB + 50% AV100 | 19775 | 20686 | 0.42 | 63.1 |
| IF2 | 50% IE1 + 50% AV100 | 23285 | 21911 | 0.60 | 63.0 |

As shown in Table 4, Inventive Film IF1, which includes 25% PCR content demonstrated greater IDI total energy values great than films CFA and CFB at similar secant modulus. Similarly, Inventive Film IF2, which includes 50% PCR content demonstrated greater IDI total energy values great than films CFC and CFD at similar secant modulus.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

## Claims

1. A thermoplastic composition comprising: from 0.5 wt% to 75.0 wt.% of a PCR comprising a blend of polyethylene recovered from post-consumer material, pre-consumer material, or combinations thereof; and from 25.0 wt.% to 99.5 wt% of virgin bimodal polyethylene, wherein:
the PCR has:
a density of from 0.900 g/cm³ to 0.975 g/cm³ when measured according to ASTM D792-08, Method B; and
a melt index (I₂) of from 0.1 dg/min to 3.0 dg/min when measured according to ASTM D1238-10, Method B, at 190 °C and a 2.16 kg load; and
the virgin bimodal polyethylene has:
a density of from 0.905 g/cm³ to 0.935 g/cm³ when measured according to ASTM D792-08, Method B;
a melt index (I₂) of from 0.1 dg/min to 1.0 dg/min when measured according to ASTM D1238-10, Method B, at 190 °C and a 2.16 kg load;
a melt flow ratio (MFR₂₁) greater than or equal to 30 but less than 70, wherein the melt flow ratio (MFR₂₁) is a ratio of a high load melt index (I₂₁) of the virgin bimodal polyethylene to the melt index (I₂) of the virgin bimodal polyethylene, and the high load melt index (I₂₁) is measured according to ASTM D1238-10, Method B, at 190 °C and a 21.6 kg load;
a molecular weight distribution (M_{w(Abs)}/M_{n(Abs)}) from 7 to 15, wherein the molecular weight distribution (M_{w(Abs)}/M_{n(Abs)}) is a ratio of a weight average molecular weight (M_{w(Abs)}) of the virgin bimodal polyethylene to a number average molecular weight (M_{n(Abs)}) of the virgin bimodal polyethylene, and the weight average molecular weight (M_{w(Abs)}) and the number average molecular weight (M_{n(Abs)}) are measured using gel permeation chromatography (GPC); and
an improved comonomer content distribution (iCCD) wt. fraction greater than 30 wt.% at a temperature range of 35 to 90 °C, the iCCD wt. fraction being defined as a ratio of the mass eluted at temperatures from 35 °C to 90 °C for the virgin bimodal polyethylene resin to the total mass eluted for the virgin bimodal polyethylene resin when measured using an iCCD curve of mass eluted versus temperature, and
an iCCD wt. fraction greater than 8% at temperature range of 95-115 °C; and
wherein at least 90.0 wt.% of the thermoplastic composition is comprised of the PCR and the virgin bimodal polyethylene.

2. The thermoplastic composition of claim 1 wherein the virgin bimodal polyethylene is defined by a fraction less than or equal to 61% for the log(MW)=5, wherein MW is measured by GPC(Abs).

3. The thermoplastic composition of any preceding claim, wherein the I₂ of the virgin bimodal polyethylene is from 0.1 to 0.5.

4. The thermoplastic composition of any preceding claim, wherein the density of the virgin bimodal polyethylene is from 0.910 to 0.925 g/cm³.

5. The thermoplastic composition of any preceding claim, wherein the PCR comprises a differential scanning calorimeter (DSC) second heat of fusion of 120 J/g to 230 J/g.

6. The thermoplastic composition of any preceding claim, wherein the PCR has a density of 0.900 to 0.940 g/cc and a melt index I₂ from 0.5 to 6 g/10 min when measured at 190 °C and 2.16 kg.

7. The thermoplastic composition of any preceding claim, wherein the PCR has a count of defect with an equivalent circular diameter in the range of 200-400 µm (per 24.6 cm³ of film) greater than 500, and a count of defect with an equivalent circular diameter in the range of 400-800 µm (per 24.6 cm³ of film) greater than 250.

8. The thermoplastic composition of any preceding claim, further comprising up to 10 wt.% of one or more additives.

9. The thermoplastic composition of any preceding claim, wherein the thermoplastic composition comprises 5.0 wt.% to 55.0 wt.% of the PCR and from 45.0 wt.% to 95.0 wt.% of the virgin bimodal polyethylene.

10. The thermoplastic composition of any preceding claim, wherein the virgin bimodal polyethylene is defined by a Short Chain Branches/1000 Carbon value (SCB)/1000 C at M_{n(Abs)} of greater than 8, preferably greater than 10, and more preferably greater than 12 as measured using GPC.

11. A method of making the thermoplastic composition of any preceding claim, the method comprising melt-blending the PCR, the virgin bimodal polyethylene, and any optional additives, thereby making the thermoplastic composition.

12. A manufactured article comprising the thermoplastic composition of any preceding claim.

## Patentansprüche

1. Thermoplastische Zusammensetzung, umfassend: zu 0,5 Gew.-% bis 75,0 Gew.-% ein PCR, umfassend ein Gemisch aus Polyethylen, das aus Post-Consumer-Material, Pre-Consumer-Material oder Kombinationen davon zurückgewonnen ist; und zu 25,0 Gew.-% bis 99,5 Gew.-% reines bimodales Polyethylen, wobei:
das PCR aufweist:
eine Dichte von 0,900 g/cm³ bis 0,975 g/cm³, wenn gemäß ASTM D792-08, Verfahren B, gemessen; und
einen Schmelzindex (I₂) von 0,1 dg/min bis 3,0 dg/min, wenn gemäß ASTM D1238-10, Verfahren B, bei 190 °C und einer Last von 2,16 kg gemessen; und
das reine bimodale Polyethylen aufweist:
eine Dichte von 0,905 g/cm³ bis 0,935 g/cm³, wenn gemäß ASTM D792-08, Verfahren B, gemessen;
einen Schmelzindex (I₂) von 0,1 dg/min bis 1,0 dg/min, wenn gemäß ASTM D1238-10, Verfahren B, bei 190 °C und einer Last von 2,16 kg gemessen;
ein Schmelzflussverhältnis (MFR₂₁) größer als oder gleich 30, jedoch kleiner als 70, wobei das Schmelzflussverhältnis (MFR₂₁) ein Verhältnis eines Hochlast-Schmelzindex (I₂₁) des reinen bimodalen Polyethylens zu dem Schmelzindex (I₂) des reinen bimodalen Polyethylens ist, und der Hochlast-Schmelzindex (I₂₁) gemäß ASTM D1238-10, Verfahren B, bei 190 °C und einer Last von 21,6 kg gemessen wird;
eine Molekulargewichtsverteilung (M_{w(Abs)}/M_{n(Abs)}) von 7 bis 15, wobei die Molekulargewichtsverteilung (M_{w(Abs)}/M_{n(Abs)}) ein Verhältnis eines Gewichtsmittels des Molekulargewichts (M_{w(Abs)}) des reinen bimodalen Polyethylens zu einem Zahlenmittel des Molekulargewichts (M_{n(Abs)}) des reinen bimodalen Polyethylens ist, und das Gewichtsmittel des Molekulargewichts (M_{w(Abs)}) und das Zahlenmittel des Molekulargewichts (M_{n(Abs)}) unter Verwendung von Gelpermeationschromatographie (GPC) gemessen werden; und
einen Gewichtsanteil einer verbesserten Comonomergehaltsverteilung (iCCD) von mehr als 30 Gew.-% in einem Temperaturbereich von 35 bis 90 °C, wobei der iCCD-Gewichtsanteil definiert ist als ein Verhältnis der bei Temperaturen von 35 °C bis 90 °C eluierten Masse für das reine bimodale Polyethylen zu der eluierten Gesamtmasse für das reine bimodale Polyethylen, wenn unter Verwendung einer iCCD-Kurve der eluierten Masse gegen die Temperatur gemessen, und
einen iCCD-Gewichtsanteil von mehr als 8 % in einem Temperaturbereich von 95-115 °C; und
wobei mindestens 90,0 Gew.-% der thermoplastischen Zusammensetzung aus dem PCR und dem reinen bimodalen Polyethylen bestehen.

2. Thermoplastische Zusammensetzung nach Anspruch 1, wobei das reine bimodale Polyethylen durch eine Fraktion von kleiner als oder gleich 61 % für den log(MW)=5 definiert ist, wobei MW durch GPC(Abs) gemessen wird.

3. Thermoplastische Zusammensetzung nach einem der vorstehenden Ansprüche, wobei der I₂ des reinen bimodalen Polyethylens von 0,1 bis 0,5 beträgt.

4. Thermoplastische Zusammensetzung nach einem der vorstehenden Ansprüche, wobei die Dichte des reinen bimodalen Polyethylens von 0,910 bis 0,925 g/cm³ beträgt.

5. Thermoplastische Zusammensetzung nach einem der vorstehenden Ansprüche, wobei das PCR eine zweite Schmelzwärme einer dynamischen Differenzkalorimetrie (DSC) von 120 J/g bis 230 J/g umfasst.

6. Thermoplastische Zusammensetzung nach einem der vorstehenden Ansprüche, wobei das PCR eine Dichte von 0,900 bis 0,940 g/cm³ und einen Schmelzindex I₂ von 0,5 bis 6 g/10 min, wenn bei 190 °C und 2,16 kg gemessen, aufweist.

7. Thermoplastische Zusammensetzung nach einem der vorstehenden Ansprüche, wobei das PCR eine Anzahl von Defekten mit einem äquivalenten kreisförmigen Durchmesser in dem Bereich von 200-400 µm (pro 24,6 cm³ Folie) von mehr als 500 und eine Anzahl von Defekten mit einem äquivalenten kreisförmigen Durchmesser in dem Bereich von 400-800 µm (pro 24,6 cm³ Folie) von mehr als 250 aufweist.

8. Thermoplastische Zusammensetzung nach einem der vorstehenden Ansprüche, ferner umfassend bis zu 10 Gew.-% ein oder mehrere Additive.

9. Thermoplastische Zusammensetzung nach einem der vorstehenden Ansprüche, wobei die thermoplastische Zusammensetzung zu 5,0 Gew.-% bis 55,0 Gew.-% das PCR und zu 45,0 Gew.-% bis 95,0 Gew.-% das reine bimodale Polyethylen umfasst.

10. Thermoplastische Zusammensetzung nach einem der vorstehenden Ansprüche, wobei das reine bimodale Polyethylen durch einen Wert für kurzkettige Verzweigungen/1000 Kohlenstoffatome (SCB)/1000 C bei M_{n(Abs)} von mehr als 8, vorzugsweise mehr als 10 und mehr bevorzugt mehr als 12, wie unter Verwendung von GPC gemessen, definiert ist.

11. Verfahren zum Herstellen der thermoplastischen Zusammensetzung nach einem der vorstehenden Ansprüche, das Verfahren umfassend ein Schmelzmischen des PCR, des reinen bimodalen Polyethylens und beliebiger optionaler Additive, wodurch die thermoplastische Zusammensetzung hergestellt wird.

12. Gefertigter Artikel, umfassend die thermoplastische Zusammensetzung nach einem der vorstehenden Ansprüche.

## Revendications

1. Composition thermoplastique comprenant : de 0,5 % en poids à 75,0 % en poids d'une résine post-consommation, RPC, comprenant un mélange de polyéthylène récupéré auprès de matériau post-consommation, de matériau pré-consommation, ou de combinaisons de ceux-ci ; et de 25,0 % en poids à 99,5 % en poids de polyéthylène bimodal vierge, dans laquelle :
la RPC a :
une masse volumique allant de 0,900 g/cm³ à 0,975 g/cm³ lorsqu'on mesure selon ASTM D792-08, Procédé B ; et
un indice de fusion (I₂) allant de 0,1 dg/min à 3,0 dg/min lorsqu'on mesure selon ASTM D1238-10, Procédé B, à 190 °C et à une charge de 2,16 kg ; et
le polyéthylène bimodal vierge a :
une masse volumique allant de 0,905 g/cm³ à 0,935 g/cm³ lorsqu'on mesure selon ASTM D792-08, Procédé B ;
un indice de fusion (I₂) allant de 0,1 dg/min à 1,0 dg/min lorsqu'on mesure selon ASTM D1238-10, Procédé B, à 190 °C et à une charge de 2,16 kg ;
un rapport d'écoulement en fusion (MFR₂₁) supérieur ou égal à 30 mais inférieur à 70, dans laquelle le rapport d'écoulement en fusion (MFR₂₁) est un rapport d'un indice de fusion sous charge élevée (I₂₁) du polyéthylène bimodal vierge à l'indice de fusion (I₂) du polyéthylène bimodal vierge, et l'indice de fusion sous charge élevée (I₂₁) est mesuré selon ASTM D1238-10, Procédé B, à 190 °C et à une charge de 21,6 kg ;
une distribution de masses moléculaires (M_{w(Abs)}/M_{n(Abs)}) allant de 7 à 15, dans laquelle la distribution de masses moléculaires (M_{w(Abs)}/M_{n(Abs)}) est un rapport d'une masse moléculaire moyenne en poids (M_{w(Abs)}) du polyéthylène bimodal vierge à une masse moléculaire moyenne en nombre (M_{n(Abs)}) du polyéthylène bimodal vierge, et la masse moléculaire moyenne en poids (M_{w(Abs)}) et la masse moléculaire moyenne en nombre (M_{n(Abs)}) sont mesurées à l'aide d'une chromatographie par perméation sur gel (CPG) ; et
une fraction pondérale de distribution de teneur en comonomères améliorée (iCCD) supérieure à 30 % en poids à une plage de température de 35 à 90 °C, la fraction pondérale d'iCCD étant définie en tant que rapport de la masse éluée à des températures allant de 35 °C à 90 °C pour la résine de polyéthylène bimodal vierge à la masse totale éluée pour la résine de polyéthylène bimodal vierge lorsqu'on mesure à l'aide d'une courbe d'iCCD de la masse éluée en fonction de la température, et
une fraction pondérale d'iCCD supérieure à 8 % à une plage de température de 95 à 115 °C ; et
dans laquelle au moins 90,0 % en poids de la composition thermoplastique est constituée de la RPC et du polyéthylène bimodal vierge.

2. Composition thermoplastique selon la revendication 1 dans laquelle le polyéthylène bimodal vierge est défini par une fraction inférieure ou égale à 61 % pour le log(MW)=5, dans laquelle MW est mesuré par CPG(Abs).

3. Composition thermoplastique selon l'une quelconque revendication précédente, dans laquelle le I₂ du polyéthylène bimodal vierge va de 0,1 à 0,5.

4. Composition thermoplastique selon l'une quelconque revendication précédente, dans laquelle la masse volumique du polyéthylène bimodal vierge va de 0,910 à 0,925 g/cm³.

5. Composition thermoplastique selon l'une quelconque revendication précédente, dans laquelle la RPC comprend une seconde chaleur de fusion par calorimètre différentiel à balayage (DSC) de 120 J/g à 230 J/g.

6. Composition thermoplastique selon l'une quelconque revendication précédente, dans laquelle la RPC a une masse volumique de 0,900 à 0,940 g/cm³ et un indice de fusion I₂ allant de 0,5 à 6 g/10 min lorsqu'on mesure à 190 °C et à 2,16 kg.

7. Composition thermoplastique selon l'une quelconque revendication précédente, dans laquelle la RPC a un nombre de défauts avec un diamètre circulaire équivalent dans la plage de 200 à 400 µm (par 24,6 cm³ de film) supérieur à 500, et un nombre de défauts avec un diamètre circulaire équivalent dans la plage de 400 à 800 µm (par 24,6 cm³ de film) supérieur à 250.

8. Composition thermoplastique selon l'une quelconque revendication précédente, comprenant en outre jusqu'à 10 % en poids d'un ou plusieurs additifs.

9. Composition thermoplastique selon l'une quelconque revendication précédente, dans laquelle la composition thermoplastique comprend 5,0 % en poids à 55,0 % en poids de la RPC et de 45,0 % en poids à 95,0 % en poids du polyéthylène bimodal vierge.

10. Composition thermoplastique selon l'une quelconque revendication précédente, dans laquelle le polyéthylène bimodal vierge est défini par une valeur de ramifications à chaîne courte/1000 carbones (SCB)/1000 C à une M_{n(Abs)} supérieure à 8, de préférence supérieure à 10, et plus préférablement supérieure à 12 telle que mesurée à l'aide d'une CPG.

11. Procédé de fabrication de la composition thermoplastique selon l'une quelconque revendication précédente, le procédé comprenant le mélangeage en fusion de la RPC, du polyéthylène bimodal vierge et de quelconques additifs facultatifs, en fabriquant de ce fait la composition thermoplastique.

12. Article manufacturé comprenant la composition thermoplastique selon l'une quelconque revendication précédente.
